# EUROPEAN PATENT APPLICATION

(11) **EP 1 357 511 A2**
(43) Date of publication of application: **29.10.2003**
(21) Application number: 03009258.9
(22) Date of filing: 23.04.2003
(51) Int. Cl.: G06K 19/04, G06K 19/077

(54) **IC tag system**

(30) Priority: 24.04.2002 JP 2002122904
(71) Applicant: Smart Card Co., Ltd., Osaka-shi, Osaka 550-0004 (JP)
(72) Inventor: Arimura, Kunitaka, Osaka-shi, Osaka 550-0004 (JP)
(74) Representative: Schäfer, Matthias, Dipl.-Ing.

(57) **Abstract**

There is provided with a responder system having a coil for noncontact connection in response to input or output, using an IC tag, which is stably adhered to an objective article such as metal or plastic, which is an insulating material or an induced material. According to the present invention, (1) a portion, to which a responder is adhered, is an approximately flat plane or a curved face that is curved inward, and (2) a coil, which has a component in the same direction of the flat plane and a component in a vertical direction to the flat plane, is constituted. Voltage is induced to the coil by a magnetic field in a direction perpendicular to a coil wire and in a direction parallel to the flat plane, so that electric power is supplied to the IC. Furthermore, ferrite cores having cylindrical-shaped, square-shaped, or semi-cylindrical shaped cross sections are used for a coil and a core, and a device for transmitting and receiving signals is provided.

## Description

### [Field of the Invention]

The present invention relates to (1) an IC tag, which is structured in such a manner that a non-contact type IC, which can read and write data and read ID codes and the like via a coil, is modularized for reading and writing data and reading ID codes and the like, and is adhered to a metal surface, which generally is unusable, and (2) an IC tag system with a transmitting/receiving device for transmitting and receiving signals.

### [Prior Art]

A conventional IC tag mostly has such a shape that thickness in an axial direction of a coil, namely a direction of a magnetic field, is thin, and that a coil is wound into a coin-like shape. When the IC tag with such a shape is adhered or placed on a metal surface, a counter-electromotive force is generated by a mirror effect, and a magnetic field due to the coil is not generated. A coil may be wound around a circular magnetic material into a capsule-like IC tag. Such a shape of the tag, however, has a circular cross section, and even when the tag is adhered onto an article, it is only adhered in a linear form, and easily peels off. Therefore, a circular coil is inappropriate for effectively interlinking (a) a surface current that flows on the metal surface with (b) a surface magnetic field. Additionally, an electric field antenna of a high frequency electromagnetic field has an almost zero electric field where it is in parallel and adjacent to a metal surface, and does not generate an induced voltage. Therefore, such an antenna is unusable.

Accordingly, a conventional circular/film-like core tag/module does not actuate an effective electromagnetic field; such shapes of tags and modules cannot be used being adhered on the metal surface.

### [Problems to Be Solved by the Invention]

An object of the present invention is to stably adhere an IC tag on a metal surface, effectively utilize current and magnetic field flow flowing on the metal surface, generate voltage to a coil with a magnetic field arisen by the surface current supply electric power to the IC with the voltage and the current, and transmit and receive signals. Even when an objective article is not metal but plastic, the voltage induced to said coil is generated by an electromagnetic field arisen from external equipment, so that the IC tag can be used without any problem. As described above, an object of the present invention is to provide such an IC tag, which is stably adhered to the objective article and used without any problem, regardless of whether the article is metal or plastic that is an insulating material or an induction material.

### [Means for Solving the Problems]

For the purpose of achieving the object of the present invention, as described in Claim 1, a responder is equipped with (a) an IC that generates new signals in response to the input of vibration energy from an external equipment in a noncontact condition, and (b) a coil for noncontact connection in response to input or output. This responder is characterized such that (1) a portion, to which said responder is adhered, has an approximately flat plane or a curved face that is curved inwardly, (2) a wire included in the flat plane, and a coil having the wire with a component perpendicular to the flat plane are constituted, and that (3) voltage is induced to said coil by a magnetic field, which is perpendicular to the coil wire and is parallel to the flat plane, so that electric power is supplied to the IC.

As described in Claim 2, the present invention is characterized such that a magnetic material is used for a core of a coil in Claim 1.

As described in Claim 3, the present invention is characterized such that a magnetic material having a cross section of a square shape, a semicylindrical shape, or a trapezoid shape is used for both (a) the coil and (b) a core of the coil in Claim 1.

As described in Claim 4, the present invention is characterized such that
(1) a receiving coil face for receiving a magnetic field, which (a) arises from said tag and (b) is parallel to the metal surface, is perpendicular to the metal surface, as similar to the case of said tag, and that
(2) a coil shaft is parallel to the metal surface.

As described in Claim 5, the present invention is an IC tag system as set forth in Claim 4, which is characterized such that one part of the coil or at least one part of a plastic case is flat, so that adhesion is facilitated by said flat part.

As described in Claim 5, the present invention is a system that is (a) equipped with a transmitting/receiving device for transmitting signals, and (b) coupled with the IC tag described in Claims 1 to 5.

### [Brief Description of the Drawings]

Figure 1 is a perspective view, which simply illustrates a structure of an IC tag according to the present invention.
Figure 2 is a view showing various kinds of conventional tags.
Figure 3 is a view showing various kinds of conventional tags.
Figure 4 is a view showing various kinds of conventional tags.
Figure 5 shows an embodiment of the present invention.
Figure 6 is a view of a tag with a shape corresponding to a circular shape or a flat plane having a curved portion.
Figure 7 illustrates the reason why a coil in parallel to the metal surface in a conventional manner is impossible or difficult to perform communication.
Figure 8 shows an embodiment, in which a loop is utilized as is similar to the present invention.
Figure 9 shows an IC tag according to the present invention, which is superior in stability and is further improved in performance.
Figure 10 illustrates an object, to which an IC tag is adhered.
Figure 11 illustrates the relationship between the IC tag and a coupling probe, which is used for transmitting and receiving signals of the IC tag.
Figure 12 illustrates another method of coupling the coupling probe, which is used for transmitting and receiving signals of the IC tag, and also shows a device for detecting and managing signals.
Figure 13 illustrates a structure of a coupler, namely a coil.
Figure 14 shows the relationship between a plurality of IC tags and a sensor coupler.

### [Preferred Embodiments of the Invention]

An IC tag system according to the present invention will be concretely described with reference to the drawings as follows.

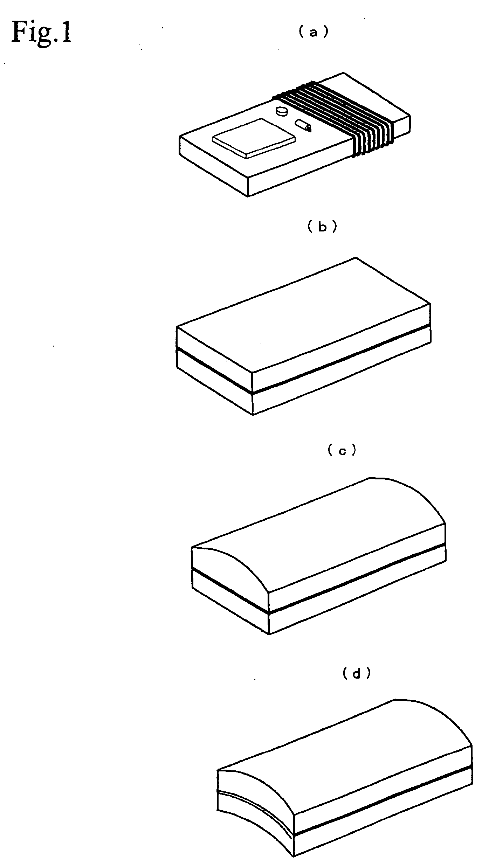

Figures 1(a), 1(b), 1(c) and 1(d) are perspective views of an IC tag according to a first embodiment of the present invention. Figure 1(a) illustrates a structure inside an IC tag, in which a coil 2 is wound around a square-shaped core 6 to form a magnetic field. An IC chip 3, a capacitor 4, and so forth are arranged on a base 5 at a portion of the core where the coil is not wound. When the coil receives an electric field and an induced voltage is generated, current is rectified and supplied to the IC, so that an IC circuit is actuated.

When writing signals are superposed, the signals are demodulated and impressed on the IC as write signals.

At the time of obtaining read signals, when electric power is applied to the IC by the induced voltage, data signals written in the IC excite the coil and generate a magnetic field inside the coil. Figure 1(b) shows a body for accommodating an IC tag 1, which is divided into an upper lid 1-1 and a lower lid 1-2, for accommodating a tag body in Figure 1(a). Figure 1(c) shows a case, where the upper lid 1-1 has a semi-circular shape. Figure 1(d) shows a case, where the upper lid 1-1 is curved into a semi-circular shape, and the lower lid 1-2 is curved into a concave shape. Figures 1(b) and (c) show examples of cases where the tag is fitted to a flat plane. Figure 1(d) shows a case where the tag is adhered onto a cylindrical metallic body such as a pipe or can.

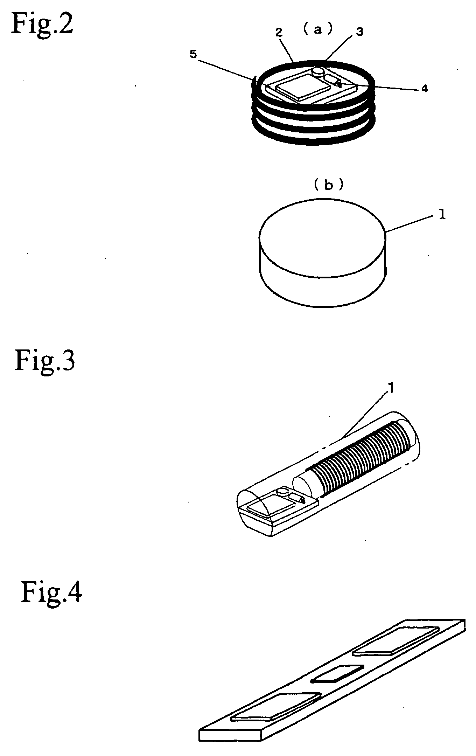

Figure 2 shows a conventional, common tag. In Figure 2(a), the tag has a coin-like shape or a button-like shape, and an IC chip 3, a capacitor 4, and so forth are arranged on a base 5 at the center of the thin and flat coil 2. Figure 2(b) illustrates a shape of a completed tag, where the tag shown in Figure 2(a) is accommodated in a case.

Figure 3 shows an example of a tag, which is accommodated in a cylindrical capsule.

Figure 4 shows an example of a tag that utilizes high frequency, namely a tag that utilizes an electric field antenna. This example utilizes a dipole antenna and is different from the previous example where the magnetic field is received to generate the induced voltage to the coil.

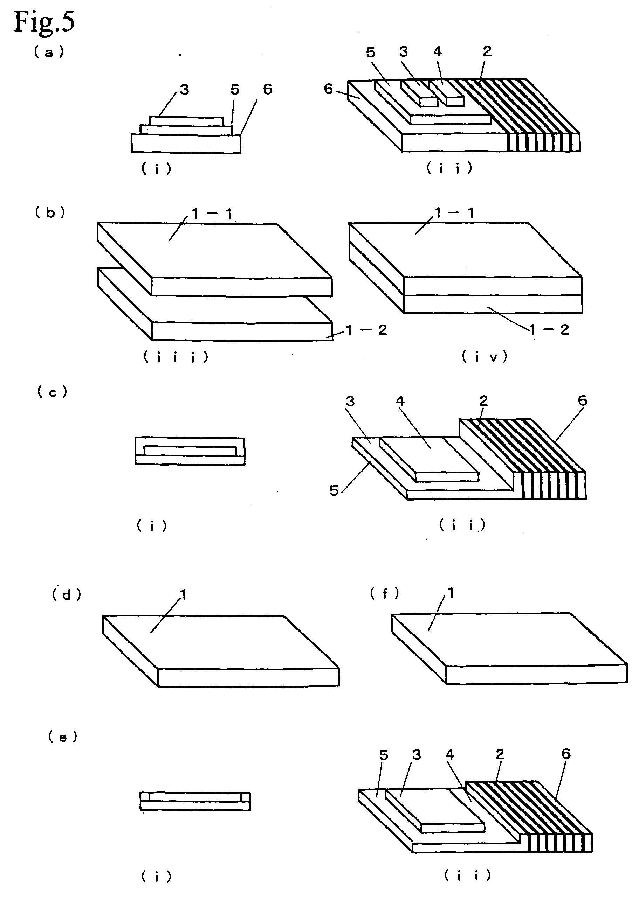

Figure 5 shows an embodiment of the present invention. Figure 5(a) shows a tag that is identical to a tag having structure of Figure 1(a) but utilizes a magnetic material such as ferrite as a core. (i) is a front view of a tag, and (ii) is a perspective view thereof. Figure 5(b) shows an accommodation box for accommodating a tag. (iii) shows the accommodation box when it is opened upward and downward. (iv) shows the accommodation box when it is closed. Figure 5(c) shows an embodiment where the IC chip 3, the capacitor 4, and so forth mounted on the base 5 are not arranged on the core 6, but in the side thereof, so that the thickness of the tag is not increased. Figure 5(d) shows an example where this tag is accommodated in a mold or a plastic case. Figure 5(e) shows an example where the shape of a magnetic core 6 is formed thin only partially, so that a space, onto which the base 5 and the IC chip 3 are mounted, is created. Figure 5(f) shows an example where the tag is accommodated in a mold or a case.

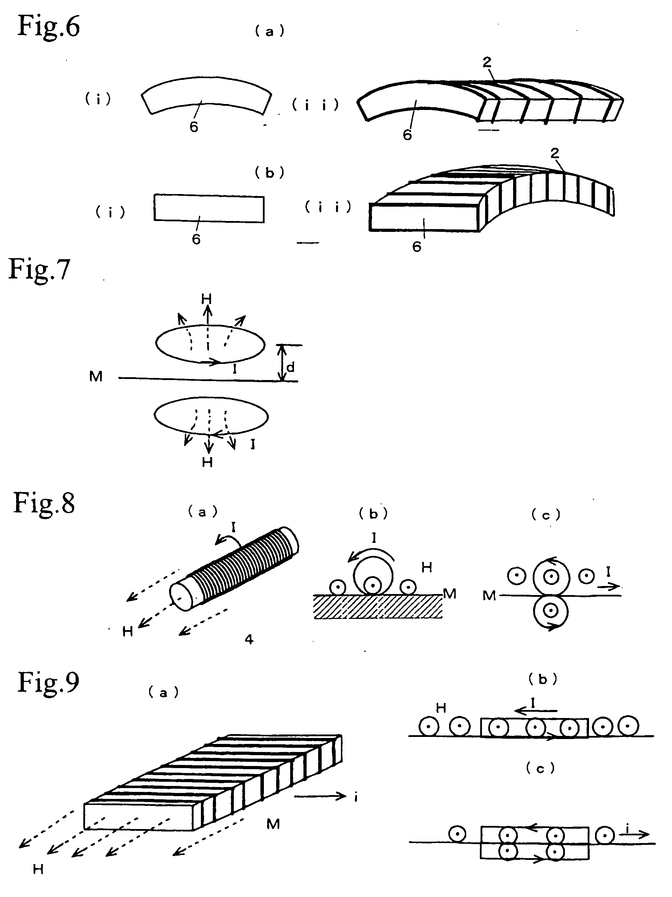

Figure 6 (a) shows an example of the tag, which corresponds to a curved surface of a metallic cylinder and the like, wherein the cross section of the core 6 is curved corresponding to the curvature of the cross section of such a cylinder. (i) is a cross sectional view, and (ii) is a perspective view thereof. Figure 6(b) shows an example where the cross section of the coil is square, but a shaft of the coil in a winding direction is curved.

Figure 7 shows that, when a loop is arranged near and in parallel to a metal surface M, and d is not equal to 0, loop current is absorbed by a mirror effect and a magnetic field generated is also absorbed. Due to such a phenomenon, a magnetic field is rarely generated by the current from the tag, and thereby signals are too weak to perform communication.

Figures 8(a), (b) and (c) show an example where a circular loop or coil is perpendicular to the metal surface, and an axial direction of the circular loop or coil is parallel to the metal surface. Figure 8(a) is a perspective view of a circular coil, which is wound into a cylindrical shape, wherein a magnetic field H is generated by the current I of the coil. Similarly, when the coil is disposed in both a surface current i of the metal surface and a surface magnetic field generated by this current, induced voltage and current are generated to the coil. Figure 8(b) is a diagram that shows how the current I of the coil and the magnetic filed H are coupled with the surface magnetic field, or generated. In Figure 8(b), a counter-electromotive force and a phase are omitted. As shown in Figure 8(c), among the coil currents generated on the opposite side of the metal surface, elements that are parallel to the metal surface are absorbed with each other, and elements that are perpendicular to the metal surface are added to each other, both due to a mirror effect (image) of the metal surface M. The direction of the current of a circular closed coil is counterclockwise seen from the front, and a magnetic field is generated in such a way that said magnetic field is added toward the front. As such, the coil axial direction of the tag to be adhered onto the metal surface must be parallel to the metal surface. Thus, because the coil of a circular cross section contacts with the metal surface only at a point, the volume of interlinking with a magnetic field along the metal surface is small, resulting in small voltage and current generated to the circular coil.

Figure 9 shows an embodiment of a square-shaped coil according to the present invention, one side of which is straight and the cross section of which is square. More particularly, this is a coil having a rectangular cross section, which is made long in such a manner that its contacting surface to contact with the metal surface is made large, wherein a wire in a direction perpendicular to the metal (in a height direction) is short. In Figure 9(a), because the length of the wire of the core, which is bought into close contact with the metal surface M, is long, the interlinking magnetic field H is made large. Also, the induced current I due to the surface current i becomes large. Figure 9(b) diagrammatically shows that a magnetic flux interlinking number of the current I induced to the coil is large. This can be interpreted that a larger amount of the surface magnetic field is generated by the current I. Figure 9(c) shows such an effect that existence of the metal surface makes the magnetic field double due to a mirror effect (image) of the square-shaped coil. Thereby, it can be determined that the existence of the metal surface, which conventionally has exerted bad influences, can be used effectively on the contrary.

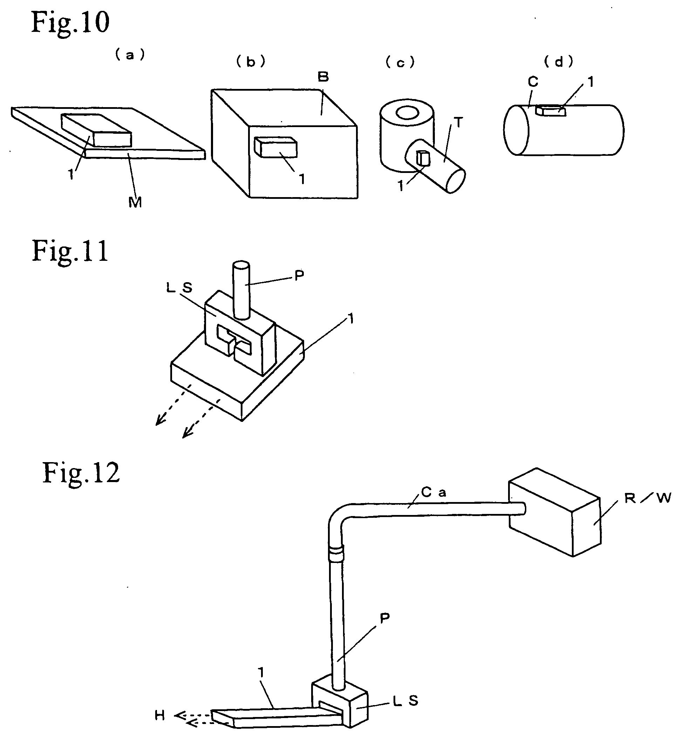

Figure 10 illustrates an object, to which a body for accommodating an IC tag **1** is adhered. Figure 10(a) shows the tag, which is adhered to the metal plate M, and can be used for both management of processing of the metal plate and management of parts. Figure 10(b) shows the tag, which is adhered to a metal box B and the like, and can be used for number maintenance or screening of instruments. Figure 10(c) shows a tag, which is adhered to parts and tools, such as a tool T, and can be used for managing parts and obtaining records. Figure 10(d) shows a tag, which is used for screening or managing cylindrical metallic cans or pipes. As described above, screening can be freely performed from either metal or plastic objects; therefore, such a tag can be used for separating or screening goods, as well as for settlement.

Figure 11 illustrates a detecting part of a sensor of the IC tag according to the present invention, and shows a structure where a sensor coil (shielding coil or loop) LS is brought into contact with the top of the Body for accommodating an IC tag, and a magnetic field generated by the coil of the IC tag is picked up.

Figure 12 shows a structure where the sensor coil LS is made close to the cross section of the coil of the IC tag to pick up the magnetic field generated from the coil, and signals captured by a sensor LS is transmitted to a read/write device (R/W) via both a pole P, which has a cable inside, and a cable Ca.

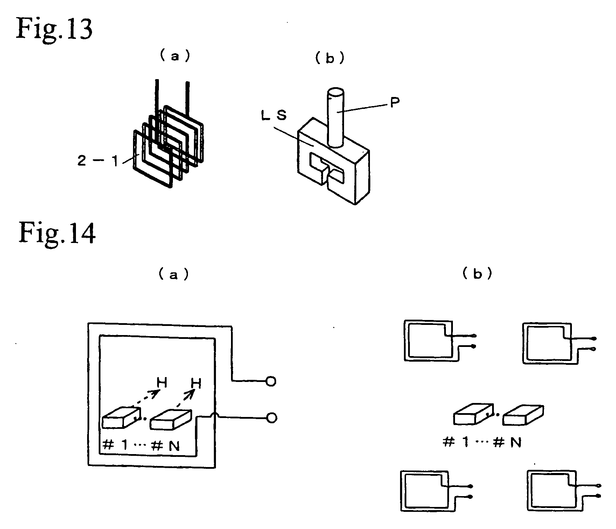

Figure 13 shows a structure of a coil or loop, which acts as a sensor coil or probe. As illustrated in Figure 13(a), a coil may be wound several times for obtaining voltage, and as illustrated in Figure 13(b), the coil may be covered with a form of a shielding loop, so that influences of induced noise or static electromagnetic force are eliminated.

In Figure 14, a plurality of IC tags #1 to #N are screened in a case or a large coil. In Figure 14(a), a plurality of IC tags are arranged inside a frame of a large coil, and in Figure 14(b), a plurality of sensor coils are arranged in such a way that signals may not collide to each other, and that shadow portions may not be generated responding to a plurality of the tags #1 to #N. Depending on a case, the respective sensor coils can be arranged at right angles or inclined.

As described above, according to the IC tag and system of the present invention, a tag can be disposed as an tag for a metal surface, which has conventionally been difficult and impossible. Also, according to the present invention, the tag can be adhered on metal surface or plastic surface, so that management, screening and settlement of any article that has a metal surface can be digitally managed, using an IC for greatly improving efficiency, and can be used for a wide range of purposes such as OA, FA, and settlement.

Claims 1 to 3 show a concrete embodiment of an IC tag.

Claim 4 shows a concrete embodiment of a transmitting and receiving sensor of an IC tag.

Claim 6 shows an embodiment of a communication-management device of an IC tag, illustrating how the IC tag can be used.

### [Explanation of Numbers in the Drawings]

- 1: Body for accommodating an IC tag
- 1-1: Upper lid of an IC tag accommodating box
- 1-2: Lower lid of an IC tag accommodating box
- 2: Coil
- 2-1: Coil for transmission and receiving
- 3: IC chip
- 4: Capacitor and so forth on parts
- 5: Base
- 6: Core
- B: Box
- C: Cylindrical pipe, can
- Ca: Cable
- H: Magnetic field
- I: Coil current
- i: Metal surface current
- LS: Shielding coil (loop) for coupling
- M: Metal plate (surface)
- P: Pole (or post) for fixing sensor coil
- R/W: Read/write device
- T: Parts and tools

## Claims

1. An IC tag system, characterized such that, in a responder that comprises (a) an IC for generating new signals in response to input of vibration energy from an external equipment in a noncontact condition, and (b) a coil for noncontact connection in response to input or output
(1) a portion, to which said responder is adhered, has an approximately flat plane or a curved face that is curved inwardly,
(2) a wire included in the flat plane and a coil having the wire with a component perpendicular to the flat plane are constituted and that
(3) voltage is induced to said coil by a magnetic field, which is perpendicular to the coil wire and is parallel to the flat plane, so that electric power is supplied to the IC.

2. An IC tag as set forth in Claim 1, characterized such that a magnetic material is used for a core portion of a coil.

3. An IC tag as set forth in Claim 1, characterized such that a magnetic material, which has partially a fiat plane of a square shape, a semi-circular shape, or a trapezoid shape.

4. An IC tag, characterized such that a receiving coil face for receiving a magnetic field, which is generated from said tag in parallel to a metal surface, is perpendicular to the metal surface as is similar to said IC tag, and that a coil shaft is parallel to the metal surface.

5. An IC tag system as set forth in Claim 4, characterized such that one part of the coil or at least one part of a plastic case is a flat plane.

6. An IC tag system, which comprises a transmitting and receiving device that is coupled to the IC tag of Claims 1 to 5 for transmitting and receiving signals.
